(19) Europäisches Patentamt / European Patent Office / Office européen des brevets

(11) **EP 2 162 299 B1**

(12) **EUROPEAN PATENT SPECIFICATION**

(45) Date of publication and mention
of the grant of the patent:
**08.08.2012 Bulletin 2012/32**

(21) Application number: **07764571.1**

(22) Date of filing: **05.06.2007**

(51) Int Cl.:
**B29D 30/48** *(2006.01)*　　　**B60C 15/06** *(2006.01)*

(86) International application number:
**PCT/EP2007/004973**

(87) International publication number:
**WO 2008/148407 (11.12.2008 Gazette 2008/50)**

(54) **Tire comprising a metal cord**

Reifen mit einem Metallkord

Pneu avec un câble métallique

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**17.03.2010 Bulletin 2010/11**

(73) Proprietor: **Pirelli Tyre S.P.A.**
**20126 Milan (IT)**

(72) Inventors:
• **AGRESTI, Simone**
**I-20126 Milano (IT)**

• **PAVAN, Federico**
**I-20126 Milano (IT)**

(74) Representative: **Checcacci, Giorgio**
**Porta, Checcacci & Associati S.p.A.**
**Via Trebbia 20**
**20135 Milano (IT)**

(56) References cited:
**EP-A- 0 009 846　　GB-A- 1 466 114
US-A- 4 978 586　　US-A- 5 219 668**

**Description**

**Field of the invention**

This invention relates to a tire, in particular to a tire for heavy transportation vehicles, comprising at least one structural element including at least one metal cord comprising a plurality of metal wires stranded together, each metal wire being coated with at least one first metal coating layer, said metal cord being coated with at least one second metal coating layer.

Also disclosed herein is a manufactured rubberized article including at least one metal cord comprising a plurality of metal wires stranded together, each metal wire being coated with at least one first metal coating layer, said metal cord being coated with at least one second metal coating layer.

Also disclosed herein is a metal cord comprising a plurality of metal wires stranded together, each metal wire being coated with at least one first metal coating layer, said metal cord being coated with at least one second metal coating layer, as well as to a process for manufacturing said metal cord.

For the purpose of the present invention, the expression "heavy transportation vehicles" means vehicles of categories M2-M3, N2-N3 and O2-O4, according to ECE Consolidated Resolution of the Construction of Vehicles (R.E. 3), Annex 7, "Classification and definition of power-driven vehicles and trailers", such as, for example, truck, tractor-trailers, lorries, buses, large vans, and other similar vehicles.

**Background of the invention**

It is well known in the art to reinforce manufactured rubberized articles such as, for example, tires, with metal wires or metal cords (said metal cords comprising a plurality of metal wires stranded together), preferably steel wires or steel cords.

Usually, the metal wires are provided with a metal coating layer to carry out the dual function of providing a suitable corrosion resistance to said metal wires, as well as to the metal cords comprising the same, and of ensuring a good adhesion of said metal wires, as well as of the metal cords comprising the same, to the crosslinked rubber material.

Moreover, the presence of said metal coating layer on said metal wires also serves other purposes such as, for example, the ease of drawing said metal wires so as to obtain metal wires having a predetermined diameter and/or a predetermined mechanical resistance.

A number of coating processes are known in the art that allow the application of said metal coating layer. For example, it is well known how to apply metal coating layer of brass (a copper-zinc alloy), or of zinc, onto steel wires, and how to carry out further treatments of these coated metal wires to obtain the desired finished products. Moreover, it is known how to draw such coated metal wires and to strand these metal wires together to obtain metal cords as final products.

European Patent Application EP 0 009 846 discloses a tire according to the preamble of claim 1 and relates to steel wires covered with a thin coating of an alloy containing copper, zinc and 2 to 19 per cent by weight of nickel. The coated steel wire has improved adhesion to rubber during vulcanization.

The application of such a metal coating layer with the desired properties such as, for example, the thickness and/or the composition of the metal coating layer, onto said metal wires, may be advantageously carried out so as to obtain intermediate products with metal coating layers having the above disclosed desired properties.

However, as disclosed, for example in United States Patent US 5,219,668 below reported, it is known that the properties of said metal coating layer (e.g., a brass coating layer) may change considerably during the intermediate treatments to which the coated metal wires may be subjected, for example during the drawing or the stranding steps, as a result of which the properties of the final products thus obtained (e.g., a metal cord) are not always satisfactory, particularly in terms of corrosion resistance and of adhesion to the crosslinked rubber material onto which they are usually embedded.

For example, in the case of tires, corrosion may be initiated in the metal cords, by the presence of moisture in the residual air which may remain inside the metal cords embedded in the crosslinked rubber material, or by direct contact with water or humidity in the case of breaking of said crosslinked rubber material which may occur during the use of the tire so causing the exposure of said metal cords to the external environment.

Attempts have been made in the art to overcome the above reported drawbacks.

For example, United States Patent US 4,978,586 relates to a steel substrate with metal coating layer for the reinforcement of vulcanizable elastomers. The substrate is provided with a first coating layer and a second coating layer at least covering part of the first one and wherein a bonding layer comprising at least one non-metallic component is present between the first and second coating layers. The second coating layer comprises, for example, cobalt that may be applied by plasma sputtering. The presence of the abovementioned bonding layer is said to guarantee a durable adhesion between said first and second layers, as well as to increase corrosion resistance, ductility, wear resistance.

United States Patent US 5,219,668 relates to a process for treating an elongated coated substrate comprising:

- providing an elongated substrate coated with a first coating layer;
- forming the elongated substrate into a first desired product;
- cathode sputtering a second coating layer onto said coated substrate using an inert sputtering gas to obtain a second desired product, wherein said first coating layer is substantially thicker than said second coating layer.

The elongated substrate to be treated may be made of metal, in particular steel, and may have a coating of brass or zinc. Said elongated substrate may be a wire, strip, cord, ect. Preferably, said second coating layer has a thickness of from 5 nm to 20 nm. The abovementioned process is said to allow final products with a coating or coating surface of the desired composition to be obtained rapidly and efficiently.

**Summary of the invention**

The Applicant has noticed that metal cords obtained as above disclosed, in particular metal cords having a second coating layer equal to or lower than 20 nm, may show some drawbacks.
In particular, the Applicant has noticed that the processes above disclosed may be unable to give stranded metal cords having a metal coating layer of sufficient thickness, so as to obtain a substantial absence of uncovered areas along the longitudinal development of said metal cords.
By the expression "uncovered areas", it is meant areas wherein the actual thickness of the metal coating layer is very low or even absent. The presence of said uncovered areas may negatively affect both the adhesion to crosslinked rubber material and the corrosion resistance of said sranded metal cords, in particular in the case of stranded metal cords which may be used in tire manufacturing.
Moreover, the Applicant has noticed that the presence of said uncovered areas also negatively affects the adhesion between tire structural elements including said stranded metal cords. In particular, Applicant has noticed that detachment of belt edges, or carcass ply edges, in particular under heavy load and stressed conditions, may occur, with a negative effect on the lifetime of the tire.
Furthermore, the Applicant has noticed that the presence of said uncovered areas negatively affects the possibility of tire retreading which is of particular importance in the case of tire for heavy load transportation vehicles.
The Applicant has faced the problem of providing stranded metal cords coated with at least one metal coating layer showing a substantial absence of uncovered areas.
The Applicant has now found that stranded metal cords coated with at least one metal coating layer having a nominal thickness higher than 50 nm and equal to or lower than 120 nm show a substantial absence of uncovered areas.
For the purpose of the present invention, the expression "nominal thickness" corresponds to the macroscopic thickness which may be measured by subjecting samples of metal cords coated with a metal coating layer to etching tests, said tests being able to remove said metal coating layer and to give an average value of the thickness of said metal coating layer along the longitudinal development of said metal cords.
The Applicant has understood that the actual thickness of a coating layer of a stranded metal cord may be locally very different from the nominal (i.e. average) thickness of the same coating layer along the longitudinal development of the stranded metal cord. In worst cases, a low nominal thickness of the coating layer may correspond to an absence of coating (i.e. to an uncovered area) in some portions of the longitudinal development of the stranded metal cord.
The Applicant has understood that a "thick" coating layer should be applied to the stranded metal cords in order to guarantee a substantial absence of uncovered areas.
The Applicant has also found that stranded metal cords coated with at least one metal coating layer having a nominal thickness higher than 50 nm and equal to or lower than 120 nm show improved adhesion to the crosslinked rubber material onto which they are embedded, in particular after saline aging, as well as improved corrosion resistance.
The Applicant has also found that said stranded metal cords are particularly useful in tire manufacturing, more in particular in tire for heavy load transportation vehicles.
According to a first aspect, the present invention relates to a tire comprising at least one structural element including at least one metal cord comprising a plurality of elementary metal wires stranded together, each elementary metal wire being coated with at least one first metal coating layer, said metal cord being coated with at least one second metal coating layer, wherein said at least one second metal coating layer has a nominal thickness higher than 50 nm and equal to or lower than 120 nm, preferably of from 70 nm to 100 nm.
The nominal thickness may be measured according to method BISFA - 95 (method E11/1) (1995). Further details about said measurements will be given in the examples which follow. It has to be understood, that in case of said at least one second metal coating layer is made of metals or metal alloys different from copper, zinc, or brass, the nitric acid solution disclosed in said standard, has to be substituted with a different solution which allow the different metals or metal alloys used to dissolve. Specific examples of such a different solution will be given in the example which follow.

The presence of said at least one second coating layer having a nominal thickness higher than 50 nm and equal to or lower than 120 nm, allows to obtain a metal cord having a substantial absence of uncovered areas along its entire longitudinal development.

For the purpose of the present invention, the expression "substantial absence of uncovered areas" means that even if present, said uncovered areas are present in a percentage lower than or equal to 1%, preferably lower than or equal to 0.5%, along any length of the entire longitudinal development of the metal cord.

For the purpose of the present invention, the expression "uncovered areas" corresponds to an area having an actual thickness (i.e. a microscopic thickness) lower than or equal to 20 nm.

Said uncovered areas may be determined by means of SEM (scanning electron microscope) analysis coupled with EDAX (energy non-dispersive X-ray diffraction analyzer). Further details about said analysis will be given in the examples which follow.

According to one embodiment, the tire comprises:

- a carcass structure comprising at least one carcass ply, of a substantially toroidal shape, having opposite lateral edges associated with respective right-hand and left-hand bead structures, each bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one reinforcing layer wound around said bead core and said bead filler so as to at least partially envelope them.

According to one preferred embodiment, said at least one structural element is a belt structure.

Typically, said belt structure comprises:

- a first belt layer, in a radially external position with respect to said carcass structure, provided with reinforcing cords parallel to one another and inclined with respect to the equatorial plane of said tire;
- a second belt layer radially superimposed on said first belt layer and provided with reinforcing cords parallel to one another and inclined with respect to the equatorial plane of said tire in a direction opposite to those of the first belt layer;
- at least one reinforcing layer radially superimposed on said second belt layer, said reinforcing layer incorporating reinforcing elements oriented in a substantially circumferential direction.

According to one preferred embodiment, said at least one structural element is said first belt layer, and/or said second belt layer, and/or said at least one reinforcing layer radially superimposed on said second belt layer.

The belt structure may further comprise a third belt layer, radially superimposed on said at least one reinforcing layer provided with reinforcing elements arranged parallel to one another and inclined with respect to the equatorial plane of said tire.

According to a further preferred embodiment, said at least one structural element is said third belt layer.

According to a further preferred embodiment, said at least one structural element is said carcass structure.

According to a further preferred embodiment, said at least one structural element is said at least one reinforcing layer wound around said bead core and said bead filler so as to at least partially envelope them.

Also disclosed herein is a manufactured rubberized article including at least one metal cord comprising a plurality of elementary metal wires stranded together, each elementary metal wire being coated with at least one first metal coating layer, said reinforcing metal cord being coated with at least one second metal coating layer, wherein said at least one second metal coating layer has a nominal thickness higher than 50 nm and equal to or lower than 120 nm, preferably of from 70 nm to 100 nm.

Also disclosed herein is a metal cord comprising a plurality of elementary metal wires stranded together, each elementary metal wire being coated with at least one first metal coating layer, said reinforcing metal cord being coated with at least one second metal coating layer, wherein said at least one second metal coating layer has a nominal thickness higher than 50 nm, preferably of from 80 nm to 120 nm.

For the purpose of the present invention, the term "plurality" should be interpreted has meaning "at least two".

For the purpose of the present invention, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The present invention, in at least one of the abovementioned aspects, may show one or more of the preferred characteristics hereinafter described.

According to one preferred embodiment, said at least one second metal coating layer comprises a metal, or a metal alloy, usually a binary or a ternary metal alloy.

Preferably, said metal may be selected, for example, from: copper, zinc, manganese, cobalt, tin, molybdenum, iron, nickel, aluminium, titanium, tantalum, niobium, zircomium, chromium; or their alloys such as, for example, brass (Zn-Cu alloy), Zn-Co alloy, Zn-Mn alloy, Zn-Sn alloy, Cu-Sn alloy, Ni-Cr alloy, Ni-Zn alloy, Cu-Mn alloy, Cu-Zn-Mn alloy, Zn-Co-Mo alloy, Zn-Fe-Mo alloy, Cu-Zn-Sn alloy. More preferably, said metal is brass, or copper, or Zn-Mn alloy, even more preferably is brass.

According to one preferred embodiment, said at least one second metal coating layer is made of brass having a copper content of from 60% by weight to 75% by weight, preferably of from 62% by weight to 70% by weight, and a zinc content of from 25% by weight to 40% by weight, preferably of from 30% by weight to 38% by weight.

According to a further preferred embodiment, said at least one second metal coating layer is made of a Zn-Mn alloy having a zinc content of from 90% by weight to 99% by weight, preferably of from 95% by weight to 98% by weight, and a manganese content of from 1% by weight to 10% by weight, preferably of from 2% by weight to 5% by weight.

According to a further preferred embodiment, said at least one second metal coating layer is made of a Ni-Cr alloy having a nickel content of from 80% by weight to 90% by weight, preferably of from 82% by weight to 88% by weight, and a chromium content of from 10% by weight to 20% by weight, preferably of from 12% by weight to 18% by weight.

According to one preferred embodiment, said elementary metal wires have a diameter (d) of from 0.10 mm to 0.50 mm, preferably of from 0.12 mm to 0.40 mm.

According to one preferred embodiment, said elementary metal wires are made of steel. Usually, the breaking strength of a standard NT (normal tensile) steel ranges from 2600 N/mm² (or 2600 MPa - MegaPascal) to 3200 N/mm², the breaking strength of a HT (High Tensile) steel ranges from 3000 N/mm² to 3600 N/mm², the breaking strength of a SHT (Super High Tensile) steel ranges from 3300 N/mm² to 3900 N/mm², the breaking strength of a UHT (Ultra High Tensile) steel ranges from 3600 N/mm² to 4200 N/mm². Said breaking strength values depend in particular on the amount of carbon contained in the steel. Preferably, the above disclosed HT, SHT and UHT elementary metal wire type are made of steel having a very high carbon content (usually greater than 0.7%).

According to one preferred embodiment, said at least one first metal coating layer has a nominal thickness of from 50 nm to 350 nm, preferably of from 70 nm to 250 nm.

According to one preferred embodiment, said at least one first metal coating layer comprises a metal, or a metal alloy, usually a binary or a ternary metal alloy. Said metal, or a binary or a ternary metal alloy may be selected from those above disclosed for said at least one second metal coating layer.

According to one preferred embodiment, said at least one first metal coating layer is made of brass, copper, or zinc, even more preferably is made of brass.

According to one preferred embodiment, said at least one first metal coating layer is made of brass having a copper content of from 60% by weight to 72% by weight, more preferably of from 62% by weight to 67% by weight, and a zinc content of from 28% by weight to 40% by weight, preferably of from 33% by weight to 38% by weight.

According to a further preferred embodiment, said at least one first metal coating layer is made of a binary Cu-Sn alloy having a copper content of from 85% by weight to 95% by weight, preferably of from 88% by weight to 90% by weight, and a tin content of from 5% by weight to 15% by weight, preferably of from 10% by weight to 12% by weight, or of a binary Zn-Mn alloy having a zinc content of from 90% by weight to 98% by weight, preferably of from 95% by weight to 97% by weight, and a manganese content of from 2% by weight to 10% by weight, preferably of from 3% by weight to 5% by weight.

According of a further prefered embodiment, said at least one first metal coating layer is made of a ternary Cu-Zn-Mn alloy having a copper content of from 60% by weight to 67% by weight, preferably of from 62% by weight to 65% by weight, a zinc content of from 30% by weight to 35% by weight, preferably of from 32% by weight to 34% by weight, and a manganese content of 2.5% by weight to 5% by weight, preferably of from 3% by weight to 4.5% by weight; or of ternary Zn-Co-Mo alloy having a zinc content of from 95% by weight to 99% by weight, preferably of from 97% by weight to 98% by weight, a cobalt content of from 0.5% by weight to 2.5% by weight, preferably of from 0.6% by weight to 1.5% by weight, and a molybdenum content of from 0.5% by weight to 2.5% by weight, preferably of from 0.6% by weight to 1.5% by weight; or of a ternary Zn-Fe-Mo alloy having a zinc content of from 95% by weight to 99% by weight, preferably of from 97% by weight to 98% by weight, a iron content of from 0.5% by weight to 2.5% by weight, preferably of from 0.6% by weight to 1.5% by weight, and a molybdenum content of from 0.5% by weight to 2.5% by weight, preferably of from 0.6% by weight to 1.5% by weight, or of a ternary Zn-Ni-Mo alloy having a zinc content of from 95% by weight to 99% by weight, preferably of from 97% by weight to 98% by weight, a nickel content of from 0.5% by weight to 2.5% by weight, preferably of from 0.6% by weight to 1.5% by weight, and a molybdenum content of from 0.5% by weight to 2.5% by weight, preferably of from 0.6% by weight to 1.5% by weight.

According to one preferred embodiment, said at least one first metal coating layer and said at least one second metal coating layer are made of the same metal or metal alloy.

Alternatively, said at least one first metal coating layer and said at least one second metal coating layer are made of different metal or metal alloy.

According to one preferred embodiment, said metal cord has a structure of the type n x d, wherein n is the number of elementary metal wires forming the cord and d is the diameter of each elementary metal wire. Preferably n ranges of from 2 to 6, more preferably of from 2 to 4.

Preferred metal cord constructions are, for example: 2 x 0.20 (i.e. two elementary metal wires twisted together, each elementary metal wire having a diameter of 0.20 mm), 3 x 0.20, 4 x 0.20, 5 x 0.20, 6 x 0.20, 2+1 x 0.20 (i.e. one strand of two metal wires and one strand of one metal wires, said two strands being twisted together, each elementary metal wire having a diameter of 0.20 mm), 2+2 x 0.20, 3+2 x 0.20, 1+4 x 0.20, 1+18 x 0.20, 3+9+15 x 0.20, 3/6 x 0.20 (i.e. three elementary metal wire stranded in one direction and six elementary metal wires stranded In the opposite direction, each elementary metal wire having a diameter of 0.20 mm).

According to one preferred embodiment, said metal cord has a stranding pitch of from 2.5 mm to 25 mm, more preferably of from 6 mm to 18 mm.

Also disclosed herein is a process for manufacturing a metal cord comprising:

(a) stranding, preferably by twisting, a plurality of elementary metal wires, each elementary metal wire being coated with at least one first metal coating layer, so as to obtain a metal cord;
(b) depositing at least one second metal coating layer onto the metal cord obtained in (a) by means of a plasma deposition technique, so as to obtain a metal cord coated with at least one second metal coating layer, said at least one second metal coating layer having a nominal thickness higher than 50 nm, preferably of from 80 nm to 120 nm.

According to one preferred embodiment, said process for manufacturing a metal cord, further comprises (c) surface-treating the metal cord obtained in (a).

Also disclosed herein is a process for manufacturing a reinforced rubberized article comprising:

(a) stranding, preferably by twisting, a plurality of elementary metal wires, each elementary metal wire being coated with at least one first metal coating layer, so as to obtain a metal cord;
(b) depositing at least one second metal coating layer onto the metal cord obtained in (a) by means of a plasma deposition technique, so as to obtain a metal cord coated with at least one second metal coating layer;
(c) optionally, surface-treating the metal cord obtained in (a);
(d) embedding at least one coated metal cord obtained in (b) into a crosslikable elastomeric material, so as to obtain a reinforced rubberized article.

Preferably, said embedding (d) may be carried out by calendering, or by extrusion.

Preferably, said process for manufacturing a reinforced rubberized article, further comprises (a) subjecting the reinforced rubberized article obtained in (d) to crosslinking.

For the purpose of the present disclosure, the expression "plasma deposition technique" is used to indicate any deposition technique which uses plasma for activating the vaporization of the metal to be deposited (such as, for example, in sputtering and in evaporation by voltaic arc), as carrier for the metal to be deposited (such as, for example, in plasma spray), or for dissociating the process gases [such as, for example, in plasma enhanced chemical vapor deposition (PECVD)], in a vacuum deposition chamber.

Preferably, said stranding (a), said depositing (b) and said optionally surface-treating (c), are carried out in a substantially continuous manner.

For the purpose of the present disclosure, the expression "in a substantially continuos manner" is used to indicate the absence, between the variuos steps of the cord manufacturing process, of intermediate storaging of semi-finished products, so as to continuously produce a coated metal cord of undefined length in a single production line.

Said at least one first metal coating layer may be provided onto said elementary metal wires by processes known in the art.

For example, said at least one first metal coating layer may be provided by means of electrochemical deposition techniques such as those disclosed, for example, in European Patent Applications EP 669,409, EP 694,631, or EP 949,356.

Alternatively, said at least one first metal coating layer may be provided by means of a plasma deposition techniques such as those disclosed, for example, in International Patent Applications WO 2004/057053, WO 2005/095668, WO 2005/095078, or WO 2006/002673.

More preferably, said at least one first metal coating layer is provided onto said elementary metal wires, preferably steel wires, by means of a process comprising:

- electrodeposition in at least one electrolytic bath; and
- drawing so as to obtain a predetermined diameter and a predetermined mechanical resistance of the coated elementary metal wire.

Optionally, a thermal treatment and pickling in acid solution, may be carried out.

Said stranding (a) may be carried out by known stranding systems such as, for example, a double twist system, or an arrangement system.

Preferably, said deposition (b) may be carried out by means of a plasma deposition technique which may be selected from the group comprising: sputtering (in particular, magnetron sputtering), evaporation by voltaic arc, plasma spray, plasma enhanced chemical vapor deposition (PECVD).

Preferably, said deposition step (b) is carried out by magnetron sputtering. In such a case, the control of the composition of said at least one second metal coating layer consisting of an alloy is advantageously improved and simplified since, in order to obtain an alloy having a desired composition, it is sufficient to use a cathode being made of an alloy of such a composition or, alternatively, at least a pair of cathodes, each cathode being made of a metal component of the alloy or of the metal alloy to be deposited onto the metal cord.

Said magnetron sputtering may be carried out with a magnetron sputtering apparatus comprising at least one vacuum deposition chamber, at least two cathodes, at least two pulleys to allow the metal cord to pass through the vacuum deposition chamber a plurality of times in order to obtain a second metal coating layer of a desired thickness, at least two power supplying elements.

Said vacuum deposition chamber is usually provided with a vacuum pump (preferably a diffusion pump, or a turbomolecular pump) suitable for creating a predetermined pressure inside of it. Furthermore, said vacuum deposition chamber is provided with devices for supplying a carrier gas, preferably argon.

Preferably, the metal cord, which behaves as anode, is made to pass into the vacuum chamber, particularly in the region near the cathode or comprised between the cathodes, so that the metal layers may be deposited onto said metal cord.

Preferably, the metal cord is coated in said vacuum deposition chamber operating at a predetermined pressure, said pressure being, preferably, of from $10^{-3}$ mbar to $10^{-1}$ mbar; more preferably of from $10^{-3}$ mbar to $5 \times 10^{-3}$ mbar.

Sputtering essentially consists of a ionic bombardment of the cathode, typically at an energy equal to 100 eV - 1000 eV and a current of from 0.1 A to 10 A, with ions of the carrier gas obtained under the action of an electrical field generated by applying a power between the cathode(s) and the anode. More specifically, ions of the carrier gas are accelerated towards the cathode(s), essentially causing a series of collisions with a consequent emission of cathode atoms directed towards the anode, i.e. towards the metal cord, towards which free electrons are also accelerated. The free electrons ionize by collision further atoms of carrier gas, whereby the process repeats itself and self-sustains as long as sufficient energy is supplied.

The use of magnetron sputtering which, thanks to the effect exerted by the magnetic field on the electrically charged particles, and in particular thanks to a confinement action of the electrons in proximity of the cathode(s) and to an increase of the plasma density, allows to increase the deposition rate.

For the purpose of the present disclosure, in case the magnetron sputtering technique is considered, the expression "cathode" or ("magnetron") is used to indicate an assembly comprising the coating material (which is the target and is preferably in the form of a plate) and a plurality of magnets which are arranged behind the coating material and which create a magnetic trap for the charged particles (e.g., argon ions) in front of the coating material. Furthermore, since the sputtering process causes the heating of the coating material, generally the cathode further comprises a cooling system, typically a plurality of channels for the passage of cooling water thererinto.

Alternatively, the magnetron sputtering apparatus comprises a first vacuum deposition chamber and a second vacuum deposition chamber which are arranged in series, each of said vacuum deposition chambers being at a first predetermined pressure.

In said case, the device intended to perform the magnetron sputtering of the second vacuum deposition chamber may be put in stand by mode. In such way, it is not necessary to interrupt the production process to substitute the source of the metal to be deposited onto the metal cord, e.g., the metal cathode in a sputtering process. Such substitution of the source of metal intended to form said at least one second metal coating layer, which must be effected when the metal source is totally consumed or a different metal has to be deposited, may be advantageously made in the first of the two vacuum deposition chambers while the second of the two vacuum deposition chambers is switched to an operative mode, thus avoiding production stops and resulting in an increase of the productivity of the disclosed process.

In addition to the possibility of substituting the metal source to be deposited on the metal cord without interrupting the manufacturing process as described above, such embodiment of the disclosed process allows to obtain different metal cord in a substantially simultaneous manner by switching to an operative mode both chambers and setting different deposition conditions, or by providing metal sources having different compositions in the two vacuum deposition chambers both set in an operative mode.

Preferably, (c) surface-treating the metal cord obtained in (a) may be carried out by subjecting the metal cord to ion-etching. To this aim, the metal cord was conveyed the metal cord in at least one pre-chamber operating at a second predetermined pressure lower than said first predetermined pressure, said at least one pre-chamber being arranged upstream of said at least one vacuum deposition chamber.

Preferably, said second predetermined pressure is of from $10^{-5}$ mbar to $10^{-3}$ mbar, more preferably of from $10^{-4}$ mbar to $5\times10^{-4}$.

By complying with the above-mentioned preferred voltage, current and gas pressure values, a deposition rate of the metal component comprised in the range of from 100 nm/min to 1000 nm/min, depending on the distance between the cathode and the anode and on the shape of the cathode, is advantageously achieved. A distance between the cathode and the anode ranging from a few cm to some tens of cm as a function of the size and shape of the cathode has been found particularly preferred in terms of effectiveness of deposition.

Preferably, said at least one pre-chamber contains the same gas used as carrier gas in the at least one vacuum deposition chamber, thus allowing to use a supply of gas of the same type both for the at least one pre-chamber and for the at least one vacuum deposition chamber. More preferably, the above-mentioned chemically inert gas is argon.

Alternatively, a deposition (b) may be carried out by voltaic arc technique, which essentially consisting of an ionic or electronic bombardment, typically at an energy in the order of 100 eV, of the metal to be deposited.

Alternatively, a deposition (b) may be carried out by plasma spray technique, essentially consisting of feeding a plasma flow of fine powders of the metal to be deposited, preferably having a size of 0.1 $\mu$m. The powders, accelerated and heated by the plasma until the melting point of the metal is reached, are directed onto the metal cord to be coated, thus creating a coating consisting of a plurality of overlaying layers of metal particles.

Alternatively, a deposition (b) may be carried out by plasma enhanced chemical vapor deposition (PECVD) technique. Such a technique essentially consists of the plasma dissociation of precursor gases in a vacuum chamber (for example at a pressure equal to 0.15 mbar - 15 mbar). Preferably, the precursor gases comprise metallorganic compounds, such as for example (hexafluoroacetylacetonate)-copper(trimethyl-vinylsilane) [(hfac)Cu(VTMS)], (hexafluoropentadionate)copper-(vinyltrimethoxysilane) [(hfac)Cu(VTMOS)], diethyl-zinc and diphenyl-zinc, which advantageously have low decomposition temperatures, in the order of 25°C-80°C.

Further detail about said plasma deposition techniques may be found, for example, in International Patent Applications WO 2004/057053, WO 2005/095668, WO 2005/095078, or WO 2006/002673 above disclosed.

## Brief description of the drawings

The features and advantages of the present invention will be made apparent by the following detailed description of some exemplary embodiments thereof, provided merely by way of non-limitative examples, description that will refer to the attached drawings wherein:

- Fig. 1 shows a view in cross-section of a portion of a tire according to one embodiment of the present invention;
- Fig. 2 shows a schematic view of a magnetron sputtering apparatus which is not part of the present invention;
- Fig. 3 shows a schematic view of a coated metal cord which is not part of the present invention.

## Detailed description of the preferred embodiments

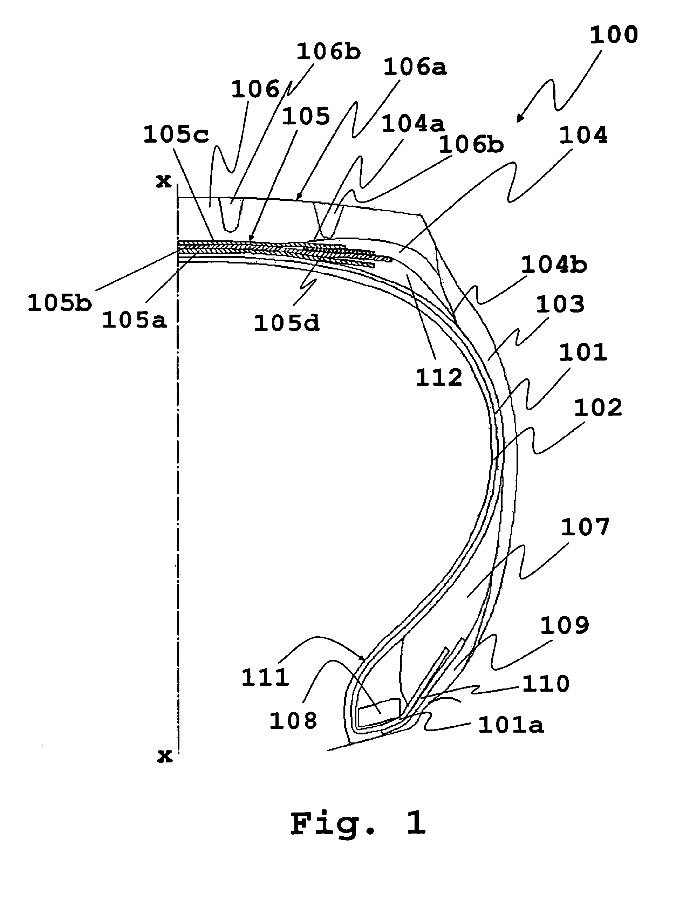

For simplicity, Fig. 1 shows only a portion of the tire, the remaining portion not represented being identical and simmetrically arranged with respect to the equatorial plane (x-x) of the tire.

The tire (100) comprises at least one carcass ply (101), the opposite lateral edges of which are associated with respective bead structures comprising at least one bead core (108) and at least one bead filler (107). The association between the carcass ply (101) and the bead core (108) is achieved here by turning back the opposite lateral edges of the carcass ply (101) around the bead core (108) so as to form the so-called carcass turn-up (101a) as shown in Fig. 1.

Alternatively, the conventional bead core (108) may be replaced with at least one annular insert formed from rubberized wires arranged in concentric coils (not represented in Fig. 1) (see, for example, European Patent Applications EP 928,680, EP 928,702, or EP 1,137,549). In this case, the carcass ply (101) is not turned-up around said annular inserts, the coupling being provided by a second carcass ply (not represented in Fig. 1) applied externally over the first.

The carcass ply (101) typically comprises a plurality of reinforcing elements arranged parallel to each other and at least partially coated with a layer of a crosslinked elastomeric material. These reinforcing elements are usually made of metal cords, which may be made according to the present invention, or of textile fibres, for example rayon, nylon or polyethylene terephthalate.

The carcass ply (101) is usually of radial type, i.e. it incorporates reinforcing elements arranged in a substantially perpendicular direction relative to a circumferential direction. The bead core (108) is enclosed in a bead (111), defined along an inner circumferential edge of the tire (100), with which the tire engages on a rim (not represented in Fig. 1) forming part of a vehicle wheel. The space defined by each carcass turn-up (101a) contains a bead filler (107) usually made of a crosslinked elastomeric material.

An antiabrasive strip (109) is usually placed in an axially external position relative to the carcass turn-up (101a).

A reinforcing layer (110), known as "flipper", is usually wound around the bead core (108) and the bead filler (107) so as to at least partially envelope them. The flipper consists of a plurality of reinforcing elements that are embedded in a layer of a crosslinked elastomeric material. These reinforcing elements are usually made of steel cords, which may be made according to the present invention, or of textile fibres, for example rayon, nylon or polyethylene terephthalate.

A belt structure (105) is applied along the circumference of the carcass ply (101) in a radially external position thereof. In the particular embodiment in Fig. 1, the belt structure (105) comprises two belt layers (105a) and (105b) which are radially superposed and which incorporate a plurality of reinforcing elements, tipically metal cords, which may be made according to the present invention, said reinforcing elements being parallel to each other in each layer and intersecting with respect to the adjacent layer, inclined preferably in a symmetrical manner with respect to the equatorial plane (x-x) of the tire at an angle of from 10° to 40°, preferably of from 12° to 30°, and coated with a crosslinked elastomeric material.

Furthermore, the belt structure (105) comprises a lateral reinforcing strip (105d), commonly known as "zero-degree reinforcing strip", radially superimposed on the second belt layer (105b). Said reinforcing strip (105d) generally incorporates a plurality of reinforcing elements, typically metal cords, which may be made according to the present invention, with a breakage elongation value of from 3% to 10%, preferably of from 3.5% to 7%, said reinforcing elements being oriented in a substantially circumferential direction forming an angle of a few degrees (i.e. 0°) with respect to the equatorial plane (x-x) of the tire, and coated with a crosslinked elastomeric material. Alternatively, instead of two lateral reinforcing strips, a continuous reinforcing layer, generally incorporating a plurality of reinforcing elements of the same kind above disclosed, which extends along the axial development of said belt structure may be present (not represented in Fig. 1).

Moreover, the belt structure (105) comprises a third belt layer (105c) radially superimposed on the second belt layer (105b) provided with reinforcing elements, typically metal cords, which may be made according to the present invention, said reinforcing elements being arranged parallel to one another, inclined with respect to the equatorial plane (x-x) of the tire by an angle of from 10° to 70°, preferably of from 12° to 40°, and coated with a crosslinked elastomeric material. Said third belt layer (105c) acts as a protection layer from stones or gravel possibly entrapped into the tread grooves (106b) and which may cause damages to the belt layers (105a) and (105b) and even to the carcass ply (101).

An insert (104) is located at the buttress area, i.e. the area where the lateral edges of the tread band (106) is connected to the sidewall (103). Usually, the insert (104) is interposed between the carcass ply (101), the belt structure (105), the tread band (106) and the sidewall (103).

More in details, the insert (104) comprises an axially inner portion (104a) which is interposed between the belt structure (105) and the tread band (106) and is tapered towards the equatorial plane (x-x) of the tire, and an axially outer portion (104b) which is interposed between the carcass ply (101) and the correspondent sidewall (103) and is tapered towards the rotational axis of the tire.

A further insert (112) made of a crosslinked elastomeric material is interposed between the carcass ply (101) and the insert (104).

A tread band (106), whose lateral edges are connected to the sidewall (103), is applied circumferentially in a position radially external to the belt structure (105). Externally, the tread band (106) has a rolling surface (106a) designed to come into contact with the ground. Circumferential grooves (106b) which are connected by transverse notches (not represented in Fig. 1) so as to define a tread pattern which comprises a plurality of blocks of various shapes and sizes distributed over the rolling surface (106a) are generally made in this surface (106a).

A side wall (103) is applied externally onto the carcass ply (101), this sidewall extending, in an axially external position, generally from the bead (111) to the tread band (106).

In the case of tubeless tires, a rubber layer (102) generally known as a liner, which provides the necessary impermeability to the inflation air of the tire, may also be provided in an inner position relative to the carcass ply (101).

As disclosed above, the reinforcing elements of the tire (100) may be made according to the present invention. According, said reinforcing elements are metal cords, preferably steel cords, comprising a plurality of elementary metal wires, preferably steel wires, stranded together, each elementary metal wire being coated with a first metal, preferably, brass, coating layer, said metal cord being coated with a second metal, preferably brass, coating layer.

As disclosed above, the tire (100) is particularly useful for heavy transportation vehicles.

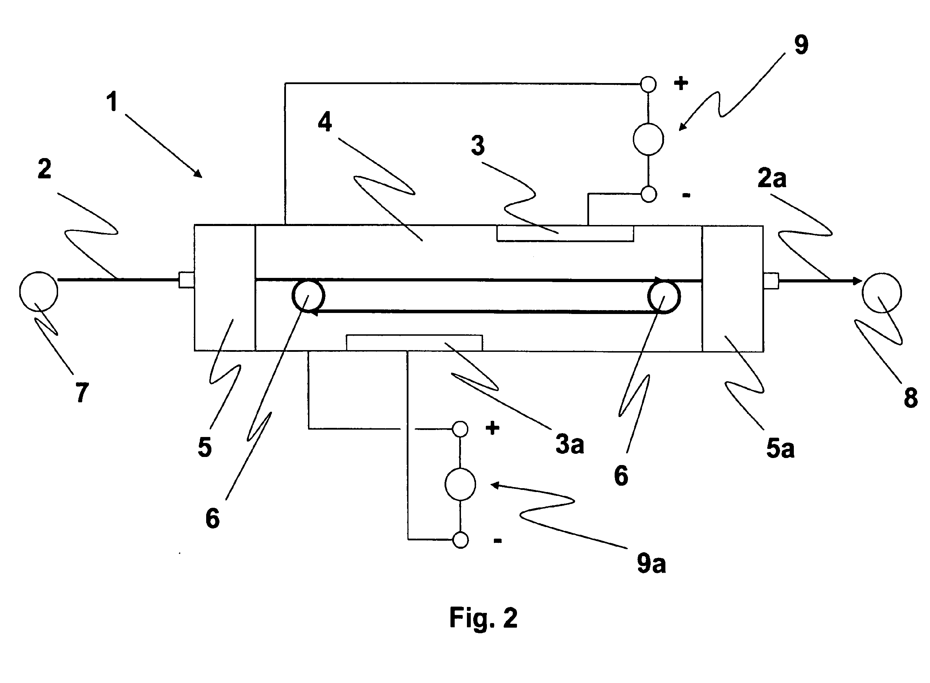

Fig. 2 shows a schematic view of a magnetron sputtering apparatus.

The magnetron sputtering apparatus (1) comprises a first pre-chamber (5), a vacuum deposition chamber (4), two cathodes (3; 3a), a second pre-chamber (5a), two pulleys (6). two power supplying elements (9; 9a).

Said vacuum deposition chamber is usually provided with a vacuum pump and with devices for supplying a carrier gas (not represented in Fig. 2).

The metal cord (2) (which behaves as an anode), preferably made of steel, is uncoiled from a payoff spool (7), is made to pass into a first pre-chamber (5) containing argon (e.g., at a pressure of $10^{-4}$ mbar) and, subsequently, into a vacuum deposition chamber (4) containing argon (e.g., at a pressure of $2 \times 10^{-3}$ mbar).

As represented in Fig. 2, the cathodes (3; 3a) are disposed on opposite sides with respect to the metal cord (2) moving direction. In more details, a first cathode (3) is provided above the metal cord (2) and a second cathode (3a) is provided below the metal cord (2), said first and second cathodes (3, 3a) being parallel to each other and transversally arranged with respect to the metal cord (2) moving direction.

Alternatively, more than two cathodes may be used, said cathodes being longitudinally distributed along the metal cord moving direction inside the vacuum deposition chamber (not represented in Fig. 2).

Alternatively, a cathode arranged above the metal cord moving direction and a cathode arranged below the metal cord moving direction, said cathodes being made of a first metal component, are positioned inside the vacuum deposition chamber along the metal cord moving direction alternately and separately to pairs of cathodes made of a second metal component so that alternate and separate layers of a first metal component and of a second metal component can be deposited onto the metal cord (not represented in Fig. 2).

In case said at least one second metal coating layer consists of a ternary alloy, pairs of cathodes made of a third metal component are alternately and separately arranged with respect to said first and second cathodes so that alternate and separate layers of first, second and third metal components are deposited onto the metal cord (not represented in Fig. 2).

For the purpose of the present invention, the term "metal component" is used to indicate a single metal element or a combination of distinct metal elements (i.e. a metal alloy).

The metal cord (2) passes through the vacuum deposition chamber (4) a predetermined number of times so that the core deposition path is advantageously improved without remarkably increasing neither the vacuum chamber length nor the number of cathodes which are necessary for ensuring that a predetermined second metal coating layer thickness is provided to the metal cord (2), while maintaining a high conveying speed thereof, e.g. in the order of 50 m/min to 150 m/min, preferably of from 80 m/min to 120 m/min.

As represented in Fig. 2, such a deposition path is obtained by conveying the metal cord (2) according to a forward and backward length to be covered for a predetermined number of times by means of two pulleys (6) so as to increase the residence time of the metal cord (2) in the deposition zone until a desired thickness of said at least one second metal coating layer is achieved.

A power (e.g., of 12 kW) was applied to the cathodes (3; 3a), by means of a power supplying elements (9; 9a), respectively.

Alternatively to the rectangular form, the cathodes may be provided in the form of circular plates through which the metal cord is made to pass (not represented in Fig. 2).

Alternatively, the cathodes are provided in the form of tubes through which the metal cord is made to pass (not represented in Fig. 2).

The coated metal cord (2a) came out from the vacuum deposition chamber (4), is made to pass into the second pre-chamber (5a) containing argon (e.g., at a pressure of $10^{-1}$ mbar) and is wound onto a take up spool (8).

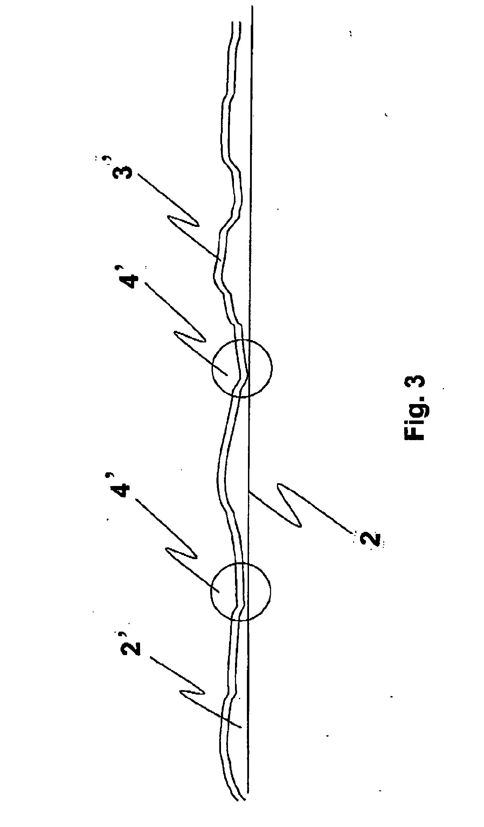

Fig. 3 shows a schematic view of a coated metal cord which is not part of the present invention.

In particular, Fig. 3 shows a metal cord (2) (for simplicity represented in a linear form, i.e. unstranded) coated with a first metal coating layer (2') having a nominal thickness of 0.2 μm, and with a second metal coating layer (3') having a nominal thickness of 60 nm.

The portions of the metal cord (2) numbered as (4'), indicates that, in case of a second metal coating layer (3') having a nominal thickness lower than 30 nm, uncovered areas may be present.

Although the present invention has been illustrated specifically in relation to a tire, the metal cords disclosed herein, may be also employed to produce other reinforced elastomeric manufactured articles such as, for example, tubes, pipes for high pressure fluids, transmission belts, or conveyor belts, drive belts, or hoses.

The present invention will be further illustrated below by means of a number of illustrative embodiments, which are given for purely indicative purposes and without any limitation of this invention.

EXAMPLE 1

A steel wire (NT steel; carbon content: 0.7%), having a diameter of 1.14 mm was coated with a brass coating layer operating as follows.

First copper layer, alkaline galvanic bath:

copper pyrophosphate: 100 g/l;
trihydrated potassium pyrophosphate: 400 g/l;
pH: 8.7 adjusted with pyrophosphoric acid;
cathode current density (copper anodes): 10 A/dm$^2$;
bath temperature: 50±5 °C.

Second copper layer, acid galvanic bath:

copper sulfate: 215 g/l;
sulfuric acid: 60 g/l;
pH: < 1;
cathode current density (copper anodes): 35 A/dm$^2$;
bath temperature: 40°C.

Third zinc layer, acid galvanic bath:

zinc heptahydrate sulfate: 370 g/l;
sodium sulfate: 30 g/l;
pH: 3;
cathode current density (zinc anodes): 35 A/dm$^2$;
bath temperature: 25±5°C.

A coated steel wire so obtained, was subjected to a thermal treatment at 440°C, for 15 seconds, to allow the zinc diffusion into the copper to form the brass alloy. Subsequently, the coated steel wire was subjected to a pickling in phosphoric acid, and then washed with water.

Then, the steel wire coated with a brass coating layer 1.5 $\mu$m thick, was subjected to drawing in a bath containing a lubricating oil (an emulsion in water of 10% by weight of a lubricating agent) by means of drawing dies made of tungsten carbide, until a steel wire having a final diameter of 0.20 mm and a brass coating layer having a nominal thickness of 0.2 $\mu$m, was obtained.

Said nominal thickness was determined according to method BISFA - 95 (method E11/1) (1995).

To this aim, three different samples of 2 cm length, were randomly taken out along the entire longitudinal development of the coated steel wire.

Each sample was placed in a beaker, rinsed with diethylether and subsequently placed in an oven at 105°C for 30 minutes until dry.

The beaker is let to cool at room temperature (23°C) in a dessicator. Subsequently, each portion was weighted, placed again in the beaker and treated with a nitric acid solution at 65% (nitric acid at 65% in water), for 30 seconds, until the brass is dissolved.

The obtained solution was transferred into a volumetric flask, each portion was rinsed again once with a nitric acid solution at 65% (nitric acid at 65% in water), and four times with demineralized water: each rinses was transferred in the same volumetric flask. The volumetric flask was then filled with demineralized water.

The so obtained solution was subjected to atomic absorption spectroscopy (AAS) analysis with a Perkin Elmer AAnalyst 200 Atomic Absorption Spectrophotometer.

The concentration (ppm) of copper (Cu) and zinc (Zn) was calculated by computer software and the nominal thickness of the wire coating layer (WCT) was calculated by the following formula:

$$(WCT)\ (\mu m): d \times 0.235 \times \text{mass of brass (g/kg)}$$

wherein:

- d is the coated steel wire diameter;
- 0.235 is a constant;
- mass of brass = [(ppm Cu + ppm Zn) x 0.2]/W wherein W is the mass in g of the of the sample of the coated steel wire.

A 1+18x0.20 NT steel cord was obtained by stranding the coated steel wires obtained as disclosed above.

The obtained steel cord was subjected to ion-etching by feeding it, in a substantially continuous manner, into a first pre-chamber containing argon at a pressure of 10$^{-4}$ mbar.

Subsequently, the steel cord was conveyed, in a substantially continuous manner, to a magnetron sputtering apparatus comprising a vacuum deposition chamber containing argon as carrier gas at a pressure of of 2x10$^{-3}$ mbar

including two plate-shaped rectangular cathodes (45 x 7 x 1 cm) made of brass, alternately arranged on opposite side of the steel cord. The distance between each one of said cathodes and the steel cord (i.e. anode) was of 29 mm.

The steel cord was fed in a substantially continuous manner into such vacuum deposition chamber at a speed of 100 m/min and the steel cord path, inside the vacuum deposition chamber, was set to 40 passages. A power of 12 kW was provided to the brass cathodes. Subsequently, the coated steel cord was made to pass through a second pre-chamber containing argon at a pressure of $10^{-1}$ mbar.

At the end of the deposition step, a second coating layer of brass (copper content of 63% by weight; zinc content 37% by weight) having a nominal thickness of 90 nm, was obtained.

Said nominal thickness was determined according to method BISFA - 95 (method E11/1) (1995).

To this aim, three different samples of 2 cm length, were randomly taken out along the entire longitudinal development of the coated NT steel cord.

Each sample was untwisted, placed in a beaker, rinsed with diethylether and subsequently placed in an oven at 105°C for 30 minutes until dry.

The beaker is let to cool at room temperature (23°C) in a dessicator. Subsequently, each portion was weighted, placed again in the beaker and treated with a nitric acid solution at 65% (nitric acid at 65% in water), for 30 seconds, until the brass is dissolved.

The obtained solution was transferred into a volumetric flask, each portion was rinsed again once with a nitric acid solution at 65% (nitric acid at 65% in water), and four times with demineralized water: each rinses was transferred in the same volumetric flask. The volumetric flask was then filled with demineralized water.

The so obtained solution was subjected to atomic absorption spectroscopy (AAS) analysis with a Perkin Elmer AAnalyst 200 Atomic Absorption Spectrophotometer.

The concentration (ppm) of copper (Cu) and zinc (Zn) was calculated by computer software and the nominal thickness of the cord coating layer (CCT) was calculated by the following formula:

$$\text{(CCT) (}\mu\text{m): [d x 0.235 x mass of brass (g/kg)]} - \text{(WCT)}$$

wherein:

- d is the coated steel cord diameter;
- 0.235 is a constant;
- mass of brass = [(ppm Cu + ppm Zn) x 0.2]/W wherein W is the mass in g of the sample of the coated steel cord;
- WCT is calculated as reported above.

EXAMPLE 2

A steel wire (NT steel; carbon content: 0.7%), having a diameter of 1.14 mm was coated with a brass coating layer operating as follows.

First copper layer, alkaline galvanic bath:

copper pyrophosphate: 100 g/l;
trihydrated potassium pyrophosphate: 400 g/l;
pH: 8.7 adjusted with pyrophosphoric acid;
cathode current density (copper anodes): 10 A/dm$^2$;
bath temperature: 50$\pm$5 °C.

Second copper layer, acid galvanic bath:

copper sulfate: 215 g/l;
sulfuric acid: 60 g/l;
pH: < 1;
cathode current density (copper anodes): 35 A/dm$^2$;

bath temperature: 40°C.

Third zinc layer, acid galvanic bath:

zinc heptahydrate sulfate: 370 g/l;
sodium sulfate: 30 g/l;
pH: 3;
cathode current density (zinc anodes): 35 A/dm$^2$;
bath temperature: 25±5°C.

A coated steel wire so obtained, was subjected to a thermal treatment at 440°C, for 15 seconds, to allow the zinc diffusion into the copper to form the brass alloy. Subsequently, the coated steel wire was subjected to pickling in phosphoric acid, and then washed with water.
Then, the steel wire coated with a brass coating layer 1.5 μm thick, was subjected to drawing in a bath containing a lubricating oil (an emulsion in water of 10% by weight of a lubricating agent) by means of drawing dies made of tungsten carbide, until a steel wire having a final diameter of 0.20 mm and a brass coating layer having a nominal thickness of 0.2 μm, was obtained.
Said nominal thickness (WCT) was determined according to method BISFA - 95 (method E11/1) (1995) as reported in Example 1.
A 1+18x0.20 NT steel cord was obtained by stranding the coated steel wires obtained as disclosed above.
The obtained steel cord was subjected to ion-etching by feeding it, in a substantially continuous manner, into a first pre-chamber containing argon at a pressure of 10$^{-4}$ mbar.
Subsequently, the steel cord was conveyed, in a substantially continuous manner, to a magnetron sputtering unit comprising a vacuum deposition chamber containing argon as carrier gas at a pressure of of 2x10$^{-3}$ mbar including two plate-shaped rectangular cathodes (45 x 7 x 1 cm) made of a zinc-manganese (Zn-Mn) alloy, alternately arranged on opposite side of the steel cord. The distance between each one of said cathodes and the steel cord (i.e. anode) was of 29 mm.
The steel cord was fed in a substantially continuous manner into such vacuum deposition chamber at a speed of 100 m/min and the steel cord path, inside the vacuum deposition chamber, was set to 40 passages. A power of 12 kW was provided to the Zn-Mn cathodes. Subsequently, the coated steel cord was made to pass through a second pre-chamber containing argon at a pressure of 10$^{-1}$ mbar.
At the end of the deposition step, a second coating layer of Zn-Mn alloy (zinc content of 98% by weight; manganese content 2% by weight) having a nominal thickness of 90 nm, was obtained.
Said nominal thickness (CCT) was determined according to method BISFA - 95 (method E11/1) (1995) as reported in Example 1. The only change made was the solution used. To this aim, an ammonia:hydrogen peroxide (1:1) solution instead of a nitric acid solution was used.

EXAMPLE 3

A steel wire (HT steel; carbon content: 0.8%), having a diameter of 1.0 mm was coated with a copper coating layer operating as follows.

First copper layer, alkaline galvanic bath:

copper pyrophosphate: 100 g/l;
trihydrated potassium pyrophosphate: 400 g/l;
pH: 8.7 adjusted with pyrophosphoric acid;
cathode current density (copper anodes): 10 A/dm$^2$;
bath temperature: 50±5 °C.

Second copper layer, acid galvanic bath:

copper sulfate: 215 g/l;

sulfuric acid: 60 g/l;

pH: < 1;

cathode current density (copper anodes): 35 A/dm$^2$;

bath temperature: 40°C.

A steel wire coated with a copper coating layer 1.5 $\mu$m thick, was subjected to drawing in a bath containing a lubricating oil (an emulsion in water of 10% by weight of a lubricating agent) by means of drawing dies made of tungsten carbide, until a steel wire having a final diameter of 0.20 mm and a copper coating layer having a nominal thickness of 0.2 $\mu$m, was obtained.

Said nominal thickness (WCT) was determined according to method BISFA - 95 (method E11/1) (1995) as reported in Example 1.

A 1+18x0.175 HT steel cord was obtained by stranding the coated steel wires obtained as disclosed above.

The obtained steel cord was subjected to ion-etching by feeding it, in a substantially continuous manner, into a first pre-chamber containing argon at a pressure of 10$^{-4}$ mbar.

Subsequently, the steel cord was conveyed, in a substantially continuous manner, to a magnetron sputtering unit comprising a vacuum deposition chamber containing argon as carrier gas at a pressure of of 2x10$^{-3}$ mbar including two plate-shaped rectangular cathodes (45 x 7 x 1 cm) made of brass, alternately arranged on opposite side of the steel cord. The distance between each one of said cathodes and the steel cord (i.e. anode) was of 29 mm.

The steel cord was fed in a substantially continuous manner into such vacuum deposition chamber at a speed of 100 m/min and the steel cord path, inside the vacuum chamber, was set to 40 passages. A power of 12 kW was provided to the brass cathodes. Subsequently, the coated steel cord was made to pass through a second pre-chamber containing argon at a pressure of 10$^{-1}$ mbar.

At the end of the deposition step, a second coating layer of brass (copper content of 63% by weight; zinc content 37% by weight) having a nominal thickness of 90 nm, was obtained.

Said nominal thickness (CCT) was determined according to method BISFA - 95 (method E11/1) (1995) as reported in Example 1.

EXAMPLE 4

A steel wire (NT steel; carbon content: 0.7%), having a diameter of 1.14 mm was coated with a zinc coating layer operating as follows.

Zinc layer, acid galvanic bath:

zinc heptahydrate sulfate: 370 g/l;

sodium sulfate: 30 g/l;

pH: 3;

cathode current density (zinc anodes): 35 A/dm$^2$;

bath temperature: 25$\pm$5°C.

A steel wire coated with a zinc coating layer 1.5 $\mu$m thick, was subjected to drawing in a bath containing a lubricating oil (an emulsion in water of 10% by weight of a lubricating agent) by means of drawing dies made of tungsten carbide, until a steel wire having a final diameter of 0.20 mm and a zinc coating layer having a nominal thickness of 0.2 $\mu$m, was obtained.

Said nominal thickness (WCT) was determined according to method BISFA - 95 (method E11/1) (1995) as reported in Example 1.

A 3+9+15x0.20 NT steel cord was obtained by stranding the coated steel wires obtained as disclosed above.

The obtained steel cord was subjected to ion-etching by feeding it, in a substantially continuous manner, into a first pre-chamber containing argon at a pressure of 10$^{-4}$ mbar.

Subsequently, the steel cord was conveyed, in a substantially continuous manner, to a magnetron sputtering unit comprising a vacuum deposition chamber containing argon as carrier gas at a pressure of of 2x10$^{-3}$ mbar including two plate-shaped rectangular cathodes (45 x 7 x 1 cm) made of copper, alternately arranged on opposite side of the steel cord. The distance between each one of said cathodes and the steel cord (i.e. anode) was of 29 mm.

The steel cord was fed in a substantially continuous manner into such vacuum deposition chamber at a speed of 100 m/min and the steel cord path, inside the vacuum chamber, was set to 40 passages. A power of 12 kW was provided to the copper cathodes. Subsequently, the coated steel cord was made to pass through a second pre-chamber containing argon at a pressure of $10^{-1}$ mbar.

At the end of the deposition step, a second coating layer of copper having a nominal thickness of 90 nm, was obtained.

Said nominal thickness (CCT) was determined according to method BISFA - 95 (method E11/1) (1995) as reported in Example 1.

EXAMPLE 5

A steel wire (NT steel; carbon content: 0.7%), having a diameter of 1.14 mm was coated with a zinc coating layer operating as follows.

Zinc layer, acid galvanic bath:

Zinc heptahydrate sulfate: 370 g/l;
sodium sulfate: 30 g/l;
pH: 3;
cathode current density (zinc anodes): 35 A/dm$^2$;
bath temperature: $25\pm5°C$.

A steel wire coated with a zinc coating layer 1.5 $\mu$m thick, was subjected to drawing in a bath containing a lubricating oil (an emulsion in water of 10% by weight of a lubricating agent) by means of drawing dies made of tungsten carbide, until a steel wire having a final diameter of 0.20 mm and a zinc coating layer having a nominal thickness of 0.2 $\mu$m, was obtained.

Said nominal thickness (WCT) was determined according to method BISFA - 95 (method E11/1) (1995) as reported in Example 1.

A 3+9+15x0.20 NT steel cord was obtained by stranding the coated steel wires obtained as disclosed above.

The obtained steel cord was subjected to ion-etching by feeding it, in a substantially continuous manner, into a first pre-chamber containing argon at a pressure of $10^{-4}$ mbar.

Subsequently, the steel cord was conveyed, in a substantially continuous manner, to a magnetron sputtering unit comprising a vacuum deposition chamber containing argon as carrier gas at a pressure of of $2x10^{-3}$ mbar including two plate-shaped rectangular cathodes (45 x 7 x 1 cm) made of brass, alternately arranged on opposite side of the steel cord. The distance between each one of said cathodes and the steel cord (i.e. anode) was of 29 mm.

The steel cord was fed in a substantially continuous manner into such vacuum deposition chamber at a speed of 100 m/min and the steel cord path, inside the vacuum chamber, was set to 40 passages. A power of 12 kW was provided to the brass cathodes. Subsequently, the coated steel cord was made to pass through a second pre-chamber containing argon at a pressure of $10^{-1}$ mbar.

At the end of the deposition step, a second coating layer of brass (copper content of 63% by weight; zinc content 37% by weight) having a nominal thickness of 90 nm, was obtained.

Said nominal thickness (WCT) was determined according to method BISFA - 95 (method E11/1) (1995) as reported in Example 1.

EXAMPLE 6

A 3+2x0.30 NT steel cord coated with a brass coating layer having a nominal thickness of 30 nm was obtained operating as disclosed in the above Example 1.

Said nominal thickness (CCT) was determined according to method BISFA - 95 (method E11/1) (1995) as reported in Example 1.

EXAMPLE 7 (comparative)

A 3+2x0.30 NT steel cord coated with a brass coating layer having a nominal thickness of 5 nm was obtained operating as disclosed in the above Example 1.

Said nominal thickness (CCT) was determined according to method BISFA - 95 (method E11/1) (1995) as reported in Example 1.

EXAMPLE 8 (comparative)

A 3+2x0.30 NT steel cord coated with a brass coating layer having a nominal thickness of 10 nm was obtained operating as disclosed in the above Example 1.

Said nominal thickness (CCT) was determined according to method BISFA - 95 (method E11/1) (1995) as reported in Example 1.

EXAMPLE 9 (comparative)

A 3+2x0.30 NT steel cord coated with a brass coating layer having a nominal thickness of 20 nm was obtained operating as disclosed in the above Example 1.

Said nominal thickness (CCT) was determined according to method BISFA - 95 (method E11/1) (1995) as reported in Example 1.

EXAMPLE 10

A 3+2x0.30 NT steel cord coated with a brass coating layer having a nominal thickness of 60 nm was obtained operating as disclosed in the above Example 1.

Said nominal thickness (CCT) was determined according to method BISFA - 95 (method E11/1) (1995) as reported in Example 1.

EXAMPLE 11 (comparative)

A steel wire (NT steel; carbon content: 0.7%), having a diameter of 1.14 mm was coated with a brass coating layer operating as follows.

First copper layer, alkaline galvanic bath:

copper pyrophosphate: 100 g/l;
trihydrated potassium pyrophosphate: 400 g/l;
pH: 8.7 adjusted with pyrophosphoric acid;
cathode current density (copper anodes): 10 A/dm$^2$;
bath temperature: 50±5 °C.

Second copper layer, acid galvanic bath:

copper sulfate: 215 g/l;
sulfuric acid: 60 g/l;
pH: < 1;
cathode current density (copper anodes): 35 A/dm$^2$;
bath temperature: 40°C.

Third zinc layer, acid galvanic bath:

Zinc heptahydrate sulfate: 370 g/l;
sodium sulfate: 30 g/l;
pH: 3;
cathode current density (zinc anodes): 35 A/dm$^2$;
bath temperature: 25±5°C.

A coated steel wire so obtained, was subjected to a thermal treatment at 440°C, for 15 seconds, to allow the zinc diffusion into the copper to form the brass alloy. Subsequently, the coated steel wire was subjected to pickling in phosphoric acid, and then washed with water.

Then, the steel wire coated with a brass coating layer 1.5 μm thick, was subjected to drawing in a bath containing a lubricating oil (an emulsion in water of 10% by weight of a lubricating agent) by means of drawing dies made of tungsten carbide, until a steel wire having a final diameter of 0.20 mm and a brass coating layer having a nominal thickness of 0.2 μm, was obtained.

Said nominal thickness (WCT) was determined according to method BISFA - 95 (method E11/1) (1995) as reported in Example 1.

A 1+18x0.20 NT steel cord was obtained by stranding the coated steel wires obtained as disclosed above. The steel cord so obtained is so avoided of a second metal coating layer.

EXAMPLE 12 (comparative)

A 3+2x0.30 NT steel cord was obtained operating as disclosed in the above Example 11. The steel cord so obtained is so avoided of a second metal coating layer.

The NT steel cords obtained as disclosed in the above Examples 1-5 (according to the invention) and Example 11 (comparative) were subjected to the following analysis.

Adhesion to the crosslinked elastomeric material

The adhesion to the crosslinked elastomeric material was measured on test pieces of crosslinked elastomeric material on NT steel cord obtained as disclosed above according to Standard ASTM D2229-04, which measure the force required to pull a cord out of a cylinder of crosslinked elastomeric material.

The "pull out force" was measured in Newton (N) using an electronic dynamometer. The values were measured both on freshly prepared crosslinked test pieces and on test pieces after age-hardening for eight days at a temperature of 65°C and at 90% relative humidity (R.H.). A "pull out" force index of 100 was attributed to the "pull out" force measured for the cord obtained according to Example 11 (comparative).

The composition of the elastomeric material which formed the crosslinked elastomeric material was, in parts % by weight, as described in the following Table 1.

TABLE 1

| Natural rubber | 100 |
|---|---|
| ZnO | 8 |
| divalent cobalt | 0.2 |
| carbon black | 50 |
| silica | 10 |
| resorcinol | 3 |
| hexamethoxymethylenemelamine | 2.4 |
| dicyclohexylbenzothiazolesulphenamide | 1.1 |
| sulfur | 4 |
| trimercaptotriazine | 0.5 |

The obtained data were given in Table 2.

Corrosion resistance

Test pieces of the NT steel cords were immersed in a 5% aqueous solution of sodium chloride (NaCl), at 25°C, and the time (min) of rust formation was measured. The obtained data were given in Table 2.

Uncovered areas (%) of the second metal coating layer

Three different samples of each NT steel cord of 2 cm length, were randomly taken out along the entire longitudinal development of the NT steel cord.

Said portions were subjected to SEM (scanning electron microscope) analysis using a Philips XL 30 scanning electron microscope to which a system (Tracor Northern) utilizing a berillium-filtered detector mounted in the lower (low-resolution) stage was attached, coupled with EDAX (energy non-dispersive X-ray diffraction analyzer) analysis. Spectra were collected for 30 seconds, at 15 KeV.

Each sample was subjected to the above analysis in 400 different points, positioned along its longitudinal development, at a distance of 1 cm from each other, and the percentage (%) of uncovered areas of the NT steel cord was determined by calculating the percentage of points having a iron content higher than 95% for each sample. The obtained data were given in Table 2.

TABLE 2

| EXAMPLE | Unaged pull out force (index) | Aged pull out force (index) | Corrosion resistance (min) | Uncovered areas (%) |
|---|---|---|---|---|
| 1 | 100 | 100 | 150 | 0 |
| 2 | 90 | 100 | 210 | 0 |
| 3 | 100 | 100 | 90 | 0 |
| 4 | 100 | 100 | 500 | 0 |
| 5 | 100 | 100 | 500 | 0 |
| 11 (*) | 100 | 80 | 90 | 3.79 |
| (*): comparative. | | | | |

Moreover, for comparative purposes, NT steel cords having a second brass coating layer of different nominal thicknesses, obtained as disclosed in Examples 7-9 (comparatives), were subjected to the analysis above reported in order to calculated the percentage (%) of uncovered areas. The obtained data were given in Table 3.

TABLE 3

| EXAMPLE | Uncovered areas (%) |
|---|---|
| 7 (*) | 2.9 |
| 8 (*) | 2.1 |
| 9 (*) | 1.1 |
| 6 | 0 |
| (*): comparative; | |

Moreover, the coated NT steel cords obtained as disclosed in the above Examples 1, 6 and 10 (according to the invention) and Example 12 (comparative) were subjected to the following analysis.

Coverage after saline ageing

To this aim, test pieces of coated NT steel cords embedded in the crosslinked elastomeric material reported in the above Table 1, were subjected to saline ageing in a saline mist chamber operating at the following conditions:

- exposure time: 0, 8, 12 and 24 days;
- saline solution: 2.5 % aqueous solution of sodium chloride (NaCl);
- mist density: 1.5 cc/h on an area 80 cm$^2$;
- chamber internal temperature: 40°C;
- chamber internal relative humidity (R.H.): 100%.

After ageing, the test pieces were treated by removing the crosslinked elastomeric material and the percentage (%) of coverage was determined: the obtained data were given in Table 4.

TABLE 4

| EXAMPLE | Coverage (%) (0 days) | Coverage (%) (8 days) | Coverage (%) (12 days) | Coverage (%) (24 days) |
|---|---|---|---|---|
| 1 | 100 | 95 | 80 | 65 |
| 6 | 100 | 95 | 95 | 75 |
| 10 | 100 | 100 | 95 | 75 |
| 12 (*) | 100 | 90 | 75 | 60 |
| (*): comparative. | | | | |

**Claims**

1. Tire (100) comprising at least one structural element including at least one metal cord (2) comprising a plurality of elementary metal wires stranded together, each elementary metal wire being coated with at least one first metal coating layer (2'), **characterized in that** said metal cord (2) is coated with at least one second metal coating layer (3') having a nominal thickness higher than 50 nm and equal to or lower than 120 nm.

2. Tire (100) according to claim 1, wherein said at least one second metal coating layer (3') has a nominal thickness of from 70 nm to 100 nm.

3. Tire (100) according to claim 1, comprising:

   - a carcass structure comprising at least one carcass ply (101), of a substantially toroidal shape, having opposite lateral edges associated with respective right-hand and left-hand bead structures, each bead structures comprising at least one bead core (108) and at least one bead filler (107);
   - a belt structure (105) applied in a radially external position with respect to said carcass structure;
   - a tread band (106) radially superimposed on said belt structure (105);
   - a pair of sidewalls (103) applied laterally on opposite sides with respect to said carcass structure;
   - at least one reinforcing layer (110) wound around said bead core (108) and said bead filler (107) so as to at least partially envelope them;

   wherein said at least one structural element is a belt structure (105).

4. Tire (100) according to claim 3, wherein said belt structure comprises:

   - a first belt layer (105a), in a radially external position with respect to said carcass structure, provided with reinforcing cords parallel to one another and inclined with respect to the equatorial plane of said tire;
   - a second belt layer (105b) radially superimposed on said first belt layer (105a) and provided with reinforcing cords parallel to one another and inclined with respect to the equatorial plane of said tire in a direction opposite to those of the first belt layer (105a);
   - at least one reinforcing layer (105d) radially superimposed on said second belt layer (105b), said reinforcing layer (105d) incorporating reinforcing elements oriented In a substantially circumferential direction;

   wherein said at least one structural element is said first belt layer (105a).

5. Tire (100) according to claim 4, wherein said at least one structural element is said second belt layer (105b).

6. Tire (100) according to claim 4 or 5, wherein said at least one structural element is said at least one reinforcing layer (1 05d) radially superimposed on said second belt layer (105b).

7. Tire (100) according to any one of claims 4 to 6, wherein said belt structure further comprises a third belt layer (105c), radially superimposed on said at least one reinforcing layer (105d) provided with reinforcing elements arranged parallel to one another and inclined with respect to the equatorial plane of said tire, wherein said at least one structural element is said third belt layer (105c).

8. Tire (100) according to claim 7, wherein said at least one structural element is said third belt layer (105c).

9. Tire (100) according to any one of claims 3 to 8, wherein said at least one structural element is said carcass structure.

10. Tire (100) according to any one of claims 3 to 9, wherein said at least one structural element is said at least one reinforcing layer (110) wound around said bead core (108) and said bead filler (107) so as to at least partially envelope them.

11. Tire (100) according to any one of the previous claims, wherein said at least one second metal coating layer (3') comprises a metal, or a metal alloy.

12. Tire (100) according to claim 11, wherein said metal is selected from: copper, zinc, manganese, cobalt, tin, molybdenum, iron, nickel, aluminium, titanium, tantalum, niobium, zircomium, chromium, or their alloys.

13. Tire (100) according to claim 12, wherein said metal is brass (Zn-Cu alloy).

14. Tire (100) according to claim 12, wherein said metal is copper.

15. Tire (100) according to claim 12, wherein said metal in Zn-Mn alloy.

16. Tire (100) according to any one of the previous claims, wherein said elementary metal wires have a diameter (d) of from 0.10 mm to 0.50 mm.

17. Tire (100) according to any one of the previous claims, wherein said elementary metal wires are made of steel.

18. Tire (100) according to any one of the previous claims, wherein said at least one first metal coating layer (2') has a nominal thickness of from 50 nm to 350 nm.

19. Tire (100) according to any one of the previous claims, wherein said at least one first metal coating layer (2') comprises a metal, or a metal alloy.

20. Tire (100) according to claim 19, wherein said at least one first metal coating layer (2') is made of brass, copper, or zinc.


**Patentansprüche**

1. Reifen (100), der mindestens ein Strukturelement umfasst, das mindestens ein Metallseil (2) einschließt, das eine Mehrzahl miteinander verseilter elementarer Metalldrähte umfasst, wobei jeder elementare Metalldraht mit mindestens einer ersten Metallbeschichtung (2') beschichtet ist, **dadurch gekennzeichnet, dass** das Metallseil (2) mit mindestens einer zweiten Metallbeschichtung (3') beschichtet ist, die eine Nenndicke größer als 50 nm und gleich oder weniger als 120 nm hat.

2. Reifen (100) gemäß Anspruch 1, worin die mindestens eine zweite Metallbeschichtung (3') eine Nenndicke von 70 nm bis 100 nm hat.

3. Reifen (100) gemäß Anspruch 1, umfassend:

   - eine Karkassenstruktur, die mindestens eine Karkassenlage (101) von im wesentlichen toroidaler Form umfasst, die gegenüberliegende Seitenkanten aufweist, die mit entsprechenden rechtsseitigen und linksseitigen Wulststrukturen assoziiert sind, wobei jede Wulststruktur mindestens einen Wulstkern (108) und mindestens einen Wulstfüller (107) umfasst;
   - eine Gürtelstruktur (105), die in Bezug auf die Karkassenstruktur in radial äußerer Position angebracht ist;
   - ein Laufflächenband (106), das radial über die Gürtelstruktur (105) aufgebracht ist;
   - ein Paar von Seitenwänden (103), die lateral an gegenüberliegenden Seiten in Bezug auf die Karkassenstruktur angebracht sind;
   - mindestens eine Verstärkungsschicht (110), die um den Wulstkern (108) und den Wulstfüller (107) gewunden ist, um sie zumindest teilweise einzuhüllen;

worin das mindestens eine Strukturelement eine Gürtelstruktur (105) ist.

4. Reifen (100) gemäß Anspruch 3, worin die Gürtelstruktur umfasst:

- eine erste Gürtelschicht (105a) in einer radial außenliegenden Position in Bezug auf die Karkassenstruktur, die mit Verstärkungsseilen versehen ist, die zueinander parallel und in Bezug auf die Äquatorebene des Reifens geneigt sind;
- eine zweite Gürtelschicht (105b), die radial auf der ersten Gürtelschicht (105a) aufgebracht ist und mit Verstärkungsseilen versehen ist, die zueinander parallel und in Bezug auf die Äquatorebene des Reifens in eine zur ersten Gürtelschicht (105a) entgegengesetzte Richtung geneigt sind;
- mindestens eine Verstärkungsschicht (105d), die radial auf der zweiten Gürtelschicht (105b) aufgebracht ist, wobei die Verstärkungsschicht (105d) Verstärkungselemente einschließt, die im wesentlichen in Umfangsrichtung orientiert sind;
worin das mindestens eine Strukturelement die erste Gürtelschicht (105a) ist.

5. Reifen (100) gemäß Anspruch 4, worin das mindestens eine Strukturelement die zweite Gürtelschicht (105b) ist.

6. Reifen (100) gemäß Anspruch 4 oder 5, worin das mindestens eine Strukturelement die mindestens eine Verstärkungsschicht (105d) ist, die radial auf der zweiten Gürtelschicht (105b) aufgebracht ist.

7. Reifen (100) gemäß irgendeinem der Ansprüche 4 bis 6, worin die Gürtelstruktur weiterhin eine dritte Gürtelschicht (105c) umfasst, die radial auf der mindestens einen Verstärkungsschicht (105d) aufgebracht ist, die mit zueinander parallelen und in Bezug auf die Äquatorebene des Reifens geneigten Verstärkungselementen versehen ist, worin das mindestens eine Strukturelement die dritte Gürtelschicht (105c) ist.

8. Reifen (100) gemäß Anspruch 7, worin das mindestens eine Strukturelement die dritte Gürtelschicht (105c) ist.

9. Reifen (100) gemäß irgendeinem der Ansprüche 3 bis 8, worin das mindestens eine Strukturelement die Karkassenstruktur ist.

10. Reifen (100) gemäß irgendeinem der Ansprüche 3 bis 9, worin das mindestens eine Strukturelement die mindestens eine Verstärkungsschicht (110) ist, die um den Wulstkern (108) und den Wulstfüller (107) gewunden ist, so dass sie sie mindestens teilweise einhüllt.

11. Reifen (100) gemäß irgendeinem der Vorhergehenden Ansprüche, worin die mindestens eine zweite Metallbeschichtung (3') ein Metall oder eine Metalllegierung umfasst.

12. Reifen (100) gemäß Anspruch 11, worin das mindestens eine Metall ausgewählt ist aus: Kupfer, Zink, Mangan, Kobalt, Zinn, Molybdän, Eisen, Nickel, Aluminium, Titan, Tantal, Niob, Zirkonium, Chrom oder deren Legierungen,

13. Reifen (100) gemäß Anspruch 12, worin das Metall Messing (Zn-Cu-Legierung) ist.

14. Reifen (100) gemäß Anspruch 12, worin das Metall Kupfer ist.

15. Reifen (100) gemäß Anspruch 12, worin das Metall eine Zn-Mn-Legierung ist.

16. Reifen (100) gemäß irgendeinem der vorhergehenden Ansprüche, worin die elementaren Metalldrähte einen Durchmesser (d) von 0,10 mm bis 0,50 mm haben.

17. Reifen (100) gemäß irgendeinem der vorhergehenden Ansprüche, worin die elementaren Metalldrähte aus Stahl sind.

18. Reifen (100) gemäß irgendeinem der vorhergehenden Ansprüche, worin die erste Metallbeschichtung (2') eine Nenndicke von 50 nm bis 300 nm hat.

19. Reifen (100) gemäß irgendeinem der vorhergehenden Ansprüche, worin die mindestens eine erste Metallbeschichtung (2') ein Metall oder eine Metalllegierung umfasst.

**20.** Reifen (100) gemäß Anspruch 19, worin die mindestens eine erste Metallbeschichtung (2') aus Messing, Kupfer oder Zink ist.

**Revendications**

**1.** Pneu (100) comprenant au moins un élément structurel incluant au moins un câble métallique (2) comprenant plusieurs fils métalliques élémentaires toronnés ensemble, chaque fil métallique élémentaire étant revêtu d'au moins une première couche de revêtement métallique (2'), **caractérisé en ce que** ledit câble métallique (2) est revêtu d'au moins une seconde couche de revêtement métallique (3') ayant une épaisseur nominale supérieure à 50 nm et inférieure ou égale à 120 nm.

**2.** Pneu (100) selon la revendication 1, dans lequel ladite au moins une deuxième couche de revêtement métallique (3') a une épaisseur nominale entre 70 nm et 100 nm.

**3.** Pneu (100) selon la revendication 1, comprenant :

- une structure de carcasse comprenant au moins une nappe de carcasse (101), de forme sensiblement toroïdale, ayant des bords latéraux opposés respectivement associés avec des structures de talon droite et gauche, chacune des structures de talon comprenant au moins une tringle de talon (108) et au moins une charge de talon (107) ;
- une structure de ceinture (105) appliquée en une position externe radialement par rapport à ladite structure de carcasse ;
- une bande de roulement (106) superposée radialement sur ladite - structure de ceinture (105) ;
- une paire de parois latérales (103) appliquées latéralement sur des côtés opposés par rapport à ladite structure de carcasse ;
- au moins une couche de renfort (110) enroulée autour de ladite tringle de talon (108) et ladite charge de talon (107) pour les envelopper au moins partiellement ;

dans lequel ledit au moins un élément structurel est une structure de ceinture (105).

**4.** Pneu (100) selon la revendication 3, dans lequel ladite structure de ceinture comprend :

- au moins une première couche de ceinture (105a), dans une position externe radialement par rapport à ladite structure de carcasse, munie de câbles de renfort parallèles entre eux et inclinés par rapport au plan équatorial dudit pneu ;
- une deuxième couche de ceinture (105b) superposée radialement sur ladite première couche de ceinture (105a) et munie de câbles de renfort parallèles entre eux et inclinés par rapport au plan équatorial dudit pneu en une direction opposée à ceux de la première couche de ceinture (105a) ;
- au moins une couche de renfort (105d) superposée radialement sur ladite deuxième couche de ceinture (105b), ladite couche de renfort (105d) incorporant des éléments de renfort orientés en une direction sensiblement circonférentielle ;

dans lequel ledit au moins un élément structurel est ladite première couche de ceinture (105a).

**5.** Pneu (100) selon la revendication 4, dans lequel ledit au moins un élément structurel est ladite deuxième couche de ceinture (105b).

**6.** Pneu (100) selon la revendication 4 ou 5, dans lequel ledit au moins un élément structurel est ladite au moins une couche de renfort (105d) superposée radialement sur ladite deuxième couche de ceinture (105b).

**7.** Pneu (100) selon l'une quelconque des revendications 4 à 6, dans lequel ladite structure de ceinture comprend une troisième couche de ceinture (105c), superposée radialement sur ladite au moins une couche de renfort (105d) munie d'éléments de renfort agencés parallèlement entre eux et inclinés par rapport au plan équatorial dudit pneu, dans lequel ledit au moins un élément structurel est ladite troisième couche de ceinture (105c).

**8.** Pneu (100) selon la revendication 7, dans lequel ledit au moins un élément structurel est ladite troisième couche de ceinture (105c).

**9.** Pneu (100) selon l'une quelconque des revendications 3 à 8, dans lequel ledit au moins un élément structurel est ladite structure de carcasse.

**10.** Pneu (100) selon l'une quelconque des revendications 3 à 9, dans lequel ledit au moins un élément structurel est ladite au moins une couche de renfort (110) enroulée autour de ladite tringle de talon (108) et de ladite charge de talon (107) pour les envelopper au moins partiellement.

**11.** Pneu (100) selon l'une quelconque des revendications précédentes, dans lequel ladite au moins une deuxième couche de revêtement métallique (3') comprend un métal, ou un alliage métallique.

**12.** Pneu (100) selon la revendication 11, dans lequel ledit métal est choisi parmi ; cuivre, zinc, manganèse, cobalt, étain, molybdène, fer, nickel, aluminium, titane, tantale, niobium, zirconium, chrome, ou leurs alliages.

**13.** Pneu (100) selon la revendication 12, dans lequel ledit métal est du laiton (alliage Zn-Cu).

**14.** Pneu (100) selon la revendication 12, dans lequel ledit métal est du cuivre.

**15.** Pneu (100) selon la revendication 12, dans lequel ledit métal est un alliage Zn-Mn.

**16.** Pneu (100) selon l'une quelconque des revendications précédentes, dans lequel lesdits fils métalliques élémentaires ont un diamètre (d) compris entre 0.10 mm et 0.50 mm.

**17.** Pneu (100) selon l'une quelconque des revendications précédentes, dans lequel lesdits fils métalliques élémentaires sont en acier.

**18.** Pneu (100) selon l'une quelconque des revendications précédentes, dans lequel ladite au moins une première couche de revêtement métallique (2') a une épaisseur nominale entre 50 nm et 350 nm.

**19.** Pneu (100) selon l'une quelconque des revendications précédentes, dans lequel ladite au moins une première couche de revêtement métallique (2') comprend un métal, ou un alliage métallique.

**20.** Pneu (100) selon la revendication 19, dans lequel ladite au moins une première couche de revêtement (2') est faite de laiton, cuivre, ou zinc.

Fig. 1

**Fig. 2**

EP 2 162 299 B1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0009846 A
- US 5219668 A
- US 4978586 A
- EP 669409 A
- EP 694631 A
- EP 949356 A
- WO 2004057053 A
- WO 2005095668 A
- WO 2005095078 A
- WO 2006002673 A
- EP 928680 A
- EP 928702 A
- EP 1137549 A